# EUROPEAN PATENT SPECIFICATION

(11) **EP 0 366 298 B1**
(45) Date of publication and mention of the grant of the patent: **13.03.1996**
(21) Application number: 89310333.3
(22) Date of filing: 10.10.1989
(51) Int. Cl.: G06K 9/46, G08B 17/00, G06T 7/00, G01R 23/16

(54) **Recognition and processing of wave forms**
Erkennung und Verarbeitung von Wellenformen
Reconnaissance et traitement de formes d'ondes

(30) Priority: 12.10.1988 GB 8823947; 02.12.1988 GB 8828166
(43) Date of publication of application: 02.05.1990
(73) Proprietor: DETECTOR ELECTRONICS CORPORATION, Minneapolis Minnesota 55438 (US)
(72) Inventor: Powell, Brian David, Maidenhead, Berkshire, SL6 3UR (GB); Davidson, Ian, Lumphanan, Aberdeenshire, AB3 4PX (GB)
(74) Representative: Foster, David Martyn

(56) References cited:
- DE-A- 3 421 782
- US-A- 4 152 642
- US-A- 4 495 585

## Description

The invention relates to apparatus for discriminating between electro-magnetic radiation from a fire source and electro-magnetic radiation from a non-fire source, comprising a sensor responsive to the radiation and producing an electrical signal whose magnitude varies with the magnitude of the radiation. The invention also relates to a corresponding method.

Such a form of apparatus and method are known from DE-A-3 421 782. In this known form of apparatus and method, a phase-locked loop (PLL) circuit is used to monitor the electrical signal and to detect the presence of any periodic interference signal. If any such periodic signal is detected, the production of a fire warning signal is suppressed and a fault warning is produced. Such known form of apparatus and methods are thus capable of detecting a periodic interference signal and suppressing a false fire warning signal. However, under certain circumstances, false warning signals can be produced by non-fire sources of radiation which generate aperiodic signals. These would not be detected and suppressed by the known form of apparatus and method. The invention aims to address this problem and to improve the sensitivity of detection of radiation from fire sources.

According to the invention, therefore, the known form of apparatus is characterised in that said apparatus further comprises detecting means operative to detect the turning points of the signal, processing means operative to determine the change in magnitude between successive turning points of the signal and including means for producing a set of outputs as points in a two-dimensional matrix or graph, each of said points being dependent on the change in magnitude of the signal between successive turning points such that the relative values of the outputs within the set are dependent on the variations in the signal, and discriminating means for comparing the set of outputs of said matrix or graph with reference values to discriminate against such a set of outputs produced when the signal corresponds to substantially regularly varying radiation or substantially step-change radiation from a non-fire source and in favour of such a set of outputs produced when the signal corresponds to substantially randomly and moderately varying radiation from a fire source.

Further in accordance with the invention, the known method is characterised by the steps of detecting the turning points of the signal, determining the change in magnitude between successive turning points of the signal and producing a set of outputs as points in a two-dimensional matrix or graph, each of said points being dependent on the changes in magnitude of the signal between successive turning points such that the relative values of the outputs within the set are dependent on the variations in the signal, and comparing the set of outputs at said matrix or graph with reference values to discriminate against such a set of outputs produced when the signal corresponds to substantially regularly varying radiation or substantially step-change radiation from a non-fire source and in favour of such a set of outputs produced when the signal corresponds to substantially randomly and moderately varying radiation from a fire source.

Flame detection apparatus and methods according to the invention will now be described, by way of example only, with reference to the accompanying drawings in which:
Figure 1 is a block diagram of one form of the apparatus;
Figure 2 is a graphical representation of a signal detected in the apparatus of Figure 1;
Figure 3 is a graphical representation of a transition matrix derived from the signal of Figure 2;
Figure 4 is a graphical representation of a signal reversal matrix derived from the signal of Figure 2;
Figure 5 is a block diagram of another form of the apparatus;
Figures 6,7 and 8 show waveforms and associated graphs for explaining the operation of the apparatus of Figure 5; and
Figure 9 is a schematic flow diagram for explaining the operation of the apparatus of Figure 5.

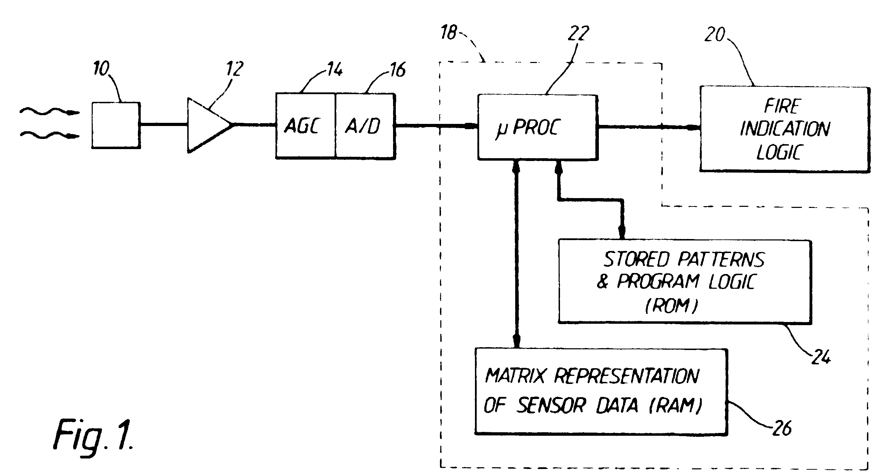

Referring to Figure 1 a fire detection system comprises a radiation sensor 10 which may suitably be a broad-band detector for visible, infrared or ultraviolet light. The output of sensor 10 is amplified at 12 and passed via an automatic gain control circuit 14 to an A-to-D converter 16. The resulting digitised signal is analysed as will be described by microcomputer 18; if this results in recognition of a fire, an alarm signal of any convenient type is generated at 20.

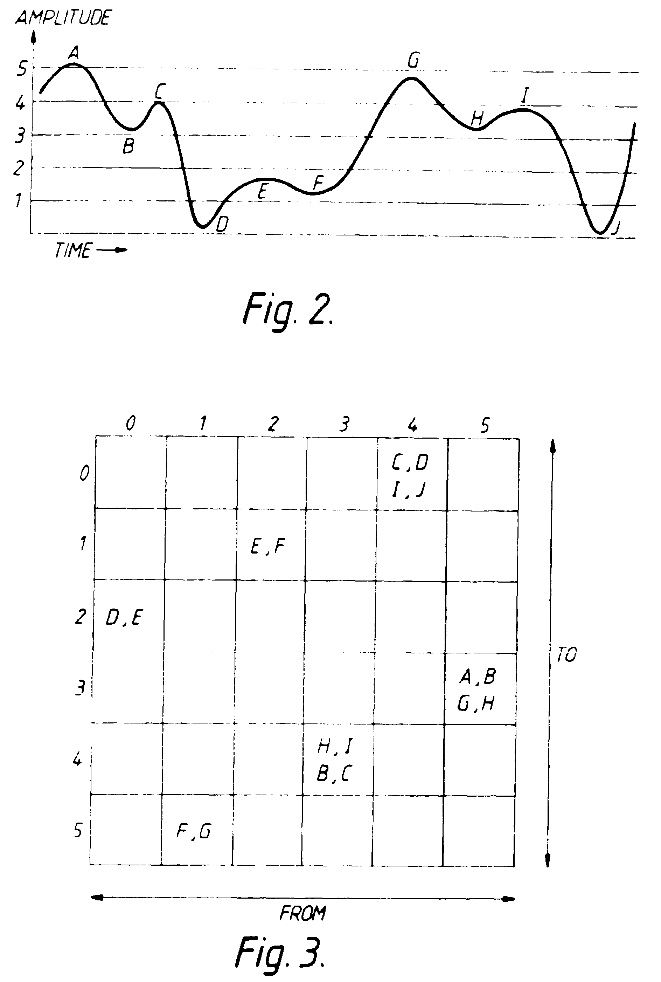

The output signal from the sensor 10 will be a relatively complex waveform, part of which is shown in Figure 2. The invention is based on deriving from the waveform one or more matrices, each representing in a simple manner information providing a significant characterisation of the waveform which can then be compared with a reference.

Figure 3 shows a "transition matrix" of the waveform of Figure 2. This is formed by detecting the transitions or the turning points A-J of the waveform and measuring the amplitude of each, in the example shown to a resolution of five amplitude levels. The matrix is then created representing the change in amplitude between successive transitions as a 2-dimensional matrix with axes defining the start and finish amplitudes of that change. For example, between C and D the amplitude changes from 4 units to 0 units, and the step C, D is positioned to define "from 4" (horizontal axis) "to 0" (vertical axis).

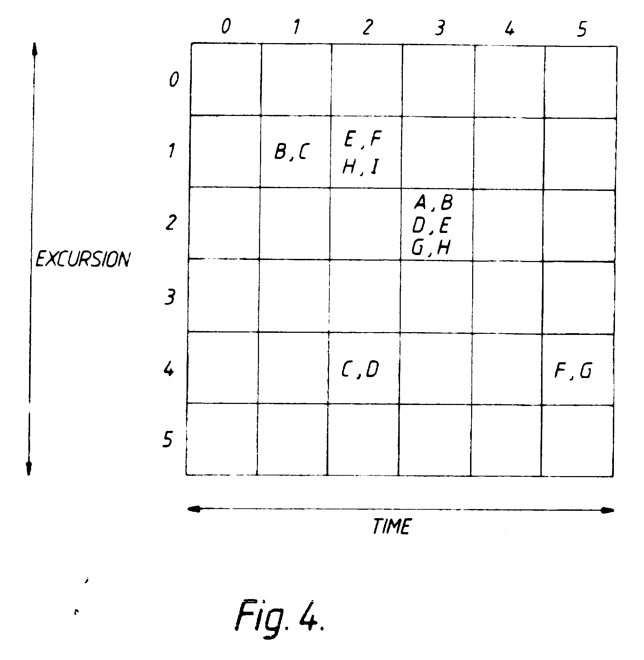

The matrix of Figure 3 is thus descriptive of the varying absolute amplitudes of the signal in a time-independent manner. Figure 4 illustrates a "signal reversal" matrix for the same signal, which is descriptive of change (but not absolute value) of amplitude with time. Here again, the matrix is based on detecting signal transitions and their amplitudes, but the elements of the matrix are the amplitude excursion and the time between transitions. Thus, for example, between F and G the excursion (vertical axis) is 4 units and the time (horizontal axis) 5 units.

The matrices may readily be derived from the digitised detected signal by the microcomputer 18, which comprises microprocessor 22, ROM 24, and RAM 26, by appropriate software within the routine competence of a person of ordinary skill in the art.

In use, a given period of sensor signal is digitised and converted into matrix form on a repetitive basis. Each matrix is stored in RAM 26, and the microprocessor 22 then operates to compare the matrix with a reference held in ROM 24. Suitable reference patterns can be developed for loading in ROM 24 by empirical methods, specifically by using a similar sensor and associated equipment to derive matrices from actual fires and actual false-alarm-inducing phenomena. If a predetermined relationship exists between a sensor matrix and a reference matrix, an alarm indication is produced.

Modifications and refinements to the handling of the matrix information may be made, particularly with the use of neural network pattern recognition systems. The two types of matrix described above may each be derived and compared with respective references, and the results of the two comparisons combined to give an overall probability. It is also possible to use auto-correlation, i.e. comparing the sensor signal with a delayed version of itself, to establish the degree of periodicity in the sensor signal as an auxiliary false alarm indication, a high degree of periodicity being associated with a false alarm situation.

Although described above with specific reference to fire detection, the apparatus may be applied to recognition of other complex variable phenomena, such as explosion detection, transient analysis, and monitoring the condition of machinery.

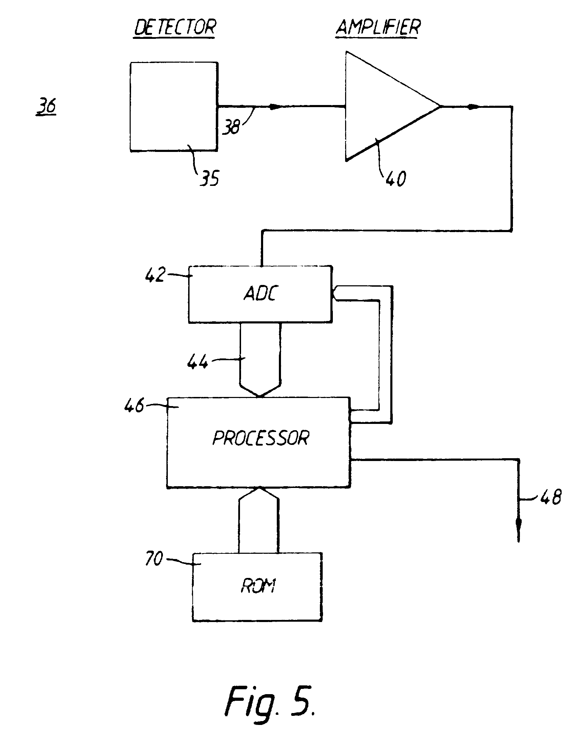

The form of apparatus shown in Figure 5 includes an infra-red radiation detector 35, such as a pyroelectric detector, which is arranged to view the area 36 in which flames to be detected are expected to arise. The detector 35 may view the area 36 through a suitable radiation filter if required. In a specific example being considered, the detector is arranged to be responsive to infra-red radiation at about 4.3 micrometres, and produces a corresponding electrical signal on a line 38 which is amplified in an amplifier 40 and passed to an analogue to digital converter 42. The resultant digital signal on channel 44, representing the varying radiation produced by the flickering flame, is passed to a processing unit 46 for analysis in the manner to be described. An output line 48 produces a warning signal if the processing unit 46 determines that the signal on line 44 represents a flame. If the processing unit 46 determines that the signal on line 44 represents a non-flame source of infra-red radiation, no warning signal is produced on line 18.

In the manner to be described, the apparatus is able to discriminate against such non-flame sources of varying infra-red radiation as incandescent lamps, moving or vibrating hot surfaces or other sources of infra-red radiation such as sunlight modulated by the passage of a moving body or bodies through its path to the detector.

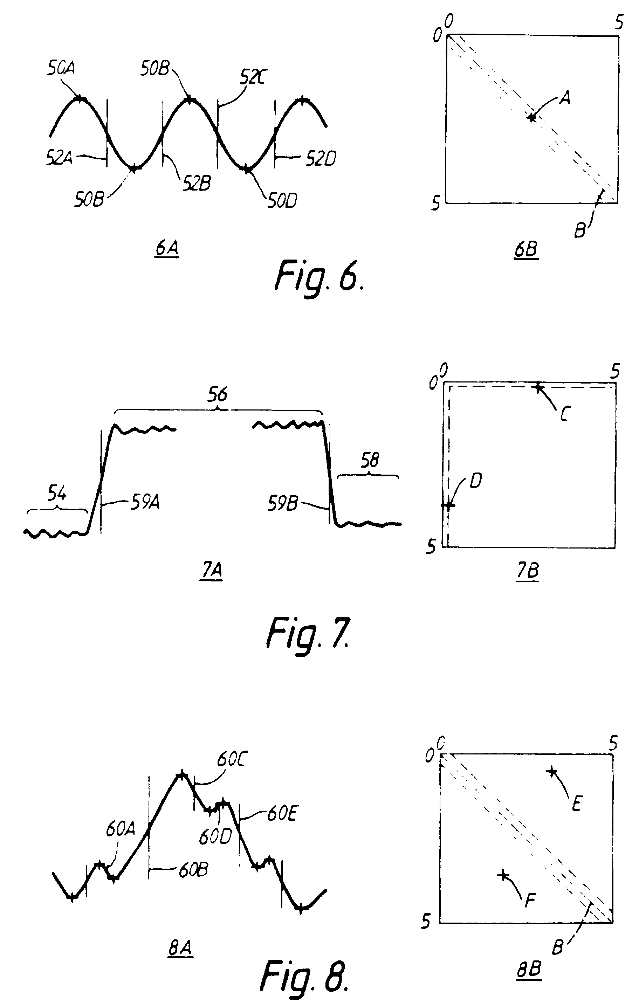

Figures 6,7 and 8 explain the operation of the apparatus.

Figure 6 illustrates at 6A the waveform (somewhat idealised) of the signal likely to be produced on line 44 (Fig. 5) in response to a regularly varying source of infra-red radiation such as a modulated incandescent lamp. As shown, the waveform 50 is substantially a regular sine wave. In the processing unit 46, each positive and negative peak 50A,50B,50C... is detected, and the processing unit measures the change in magnitude between each peak value and the immediately preceding peak value so as to produce a succession of "magnitude change" signals. These magnitude change signals are represented in Figure 6A by the vertical lines 52A,52B,52C... In view of the regular form of the waveform shown in Figure 6A, each of these magnitude change values will be approximately the same. In the manner to be described in more detail, the processing unit 46 analyses the magnitude change signals by comparing the value of each one with the previous one.

Figure 6B shows in diagrammatic form the processing carried out. In Figure 6B, the horizontal axis from the origin 0/0 has an arbitrary scale of 0 to 5 and represents the value of each magnitude change signal being considered. The vertical axis downwards from the origin 0/0 is calibrated to the same arbitrary scale and represents the value of the immediately preceding magnitude change signal. Therefore, considering the magnitude change signals 52A and 52B (Figure 6A), point A on Figure 6B represents the comparison between them in graphical fashion; thus, point A represents the point corresponding the intersection of the value of the magnitude change signal 52B plotted on the horizontal axis and the value of the magnitude change signal 52A plotted on the vertical axis.

The regular nature of the waveform of Figure 6A is such that the corresponding plot on Figure 6B for the comparison of the magnitude change signal 52C with the magnitude change signal 52B will also be at point A. As long as the amplitude of the waveform shown in Figure 6A remains the same, all plots will be at point A. If the amplitude of the waveform is different, but still regular, the plots on Figure 6B will be differently positioned, but will always be on the diagonal line shown chain-dotted at B.

Figure 7A shows the waveform represented by the digital signal on line 44 (Figure 5) for the case where the infra-red radiation being received is from a source which is randomly switched on and off or interrupted. For example, the waveform at region 54 could represent low background radiation. A source of radiation is then suddenly switched on and the level rises to that shown at region 56. This radiation continues and is then abruptly switched off and the detected radiation once more reduces to the background level as shown at region 58. Instead, for example, the radiation in region 56 could be radiation from a hot surface which is interrupted or blocked from the detector over regions 54 and 58.

The waveform shown in Figure 7A is processed in the processor 46 in the same way as described above. The processing unit senses the positive and negative peaks and measures the magnitude change between the successive peaks. The value of each such magnitude change signal is then compared with the immediately preceding one. Figure 7B shows a graph corresponding to that shown in Figure 6B. It will be apparent that, over regions 54,56 and 58, the signal is fluctuating between peaks whose magnitude difference is very small. Therefore, the corresponding plots on Figure 7B will be clustered around the origin 0/0 - and are not illustrated in Figure 7B. When the waveform undergoes the transition from region 54 to region 56, there will be a large change, shown at 59A, and the corresponding plot is shown at C in Figure 7B. Similarly, there will be a large change, 59B, when the waveform switches from region 56 to region 58, and the corresponding plot is shown at point D. It will therefore be apparent that, with a waveform of the form shown in Figure 7B, the plots on the graph will either be clustered around the origin or will be close to the horizontal or vertical axes.

Figure 8A shows the waveform of the signal on line 44 when the infra-red radiation received is from a flame. As will be apparent, the waveform is significantly random. As before, the processing unit 46 detects each positive and negative peak and measures the value of the magnitude change between each peak and the preceding one and then compares successive values of these magnitude cange signals, such as the magnitude change signals shown at 60A,60B,60C,60D.

Figure 8B shows some of the corresponding points on a graph of the same form as that shown in Figures 6B and 7B. Thus, point E is the plot produced by comparing the magnitude change signal 60B with the magnitude change signal 60A. At point F is shown the plot produced by comparing the magnitude change signal 60C with the magnitude change signal 60B. Because of the nature of the waveform of Figure 8A, which varies much more randomly than the waveforms shown in Figures 6A and 7A, the corresponding points on the graph of Figure 8B will tend to be positioned away from the diagonal line B and also away from the horizontal and vertical axes.

The processing unit therefore analyses the incoming waveform on line 44 and, for a fixed number of events where each event consists of a comparison of the value of a magnitude change signal with the value of the immediately preceding magnitude change signal), determines the respective proportions of the number of events which produce (a) plots either on the diagonal B (Figs, 6B,7B and 8B) or close to the horizontal and vertical axes, and (b) plots which are spaced from the diagonal and from the axes. For example, the analysis could be carried out by assigning a negative "score" e.g. -1) to each event producing a plot on the diagonal B or adjacent to the horizontal and vertical axes, and assigning a positive score (e.g. +1) to each event which produces a plot (corresponding to plots D and F, for example) spaced from the diagonal and spaced from the horizontal and vertical axes. After a predetermined number of events, the negative total is subtracted from the positive total to give a resultant number. A more positive number will indicate that the signal being compared corresponds to radiation from a flame, whereas a more negative number will indicate that the signal corresponds to radiation produced from an interfering source such as one producing waveform 6A or 7A. Numerical limits can be incorporated into the processing. Thus, for example, processing unit 46 may be arranged to produce a flame warning signal on line 48 only when the number produced by subtracting X from Y is more positive than a fixed threshold.

In practice, of course, sources of interfering radiation of the form shown in Figure 6A will not always produce plots exactly on diagonal B. Therefore, all plots lying within a region whose boundaries lie either side of the diagonal B (as shown by the dotted lines adjacent to the diagonal B) would be considered as representing radiation from interfering sources of the type producing waveform A. Similarly, all points lying within defined regions running parallel to the horizontal and vertical axes would be considered as being derived from interfering radiation of the type producing waveform 7A.

It will be noted that no account is taken of the sign of the magnitude change signals, merely their actual magnitude values.

The program for controlling the processing unit 46 and the thresholds used in the assessment and decision processes may be stored in the ROM 70 (Fig. 5).

The number of events necessary for the processing unit 46 to make a decision can be arranged on a "rolling" basis. For example, the unit 46 can make its decision on the basis of a consideration of the immediately preceding twenty events, each new event occurring then being considered in combination with the immediately preceding nineteen events.

It is also desirable that an assessment be made of the intensity of the radiation so that a warning is only given when (a) the radiation is determined (in the manner described) to originate from a flame and (b) its intensity exceeds a minimum level. The latter may be achieved by adding the magnitude of each magnitude change signal to those of the preceding nineteen on a rolling basis.

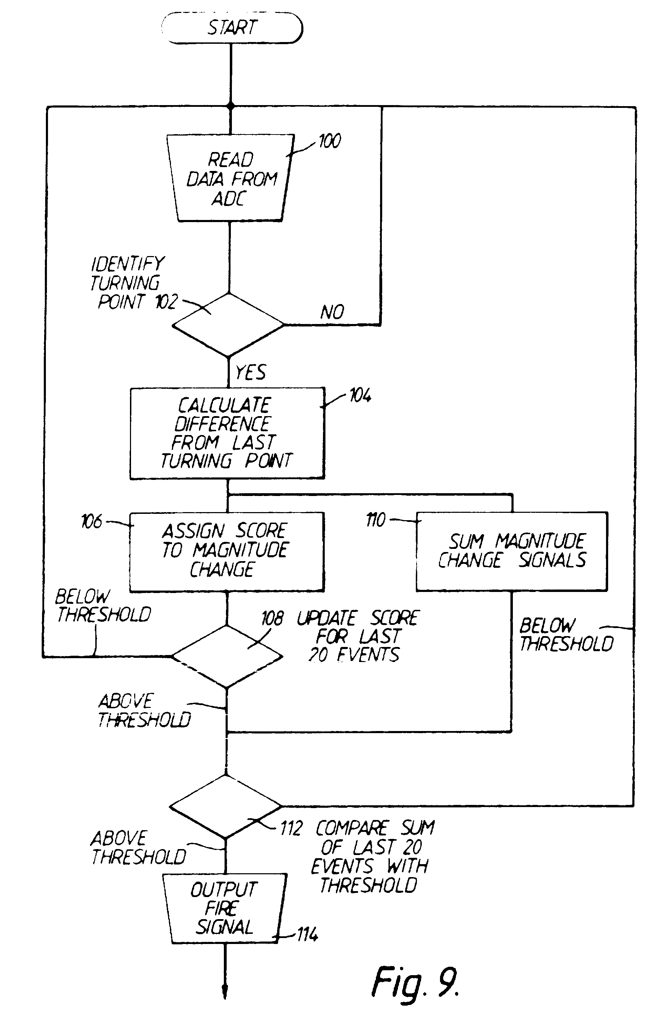

Figure 9 shows a flow chart for explaining such processes in more detail.

Block 100 represents the process of reading the data from the analogue to digital converter which may, for example, be carried out by sampling the received digital representation at intervals substantially less than the period of waveforms likely to be received. At block 102, the process checks each sample and compares its magnitude with the previous sample so as to determine whether a turning point has been reached. If it has, the difference from the previous turning point is calculated at block 104 and compared with the previous difference in block 106, a score being assigned according to the notional position of the event on the graph shown in Figs 6 to 8; for example each event of the type shown in Fig. 8 could be assigned a score of +1 and each event of the type shown in Fig. 6 or Fig. 7 could be assigned a score of -1. In practice, however, better discrimination may be achieved by assigning each event of the type shown in Figure 8 a more positive score such as +10. Block 108 represents the comparison process by which the current score is added to the previous 19 (for example) scores, and the result compared with a threshold. Block 110 represents the summing of the magnitudes of the differences between successive events (the magnitude change signals) and at 112 the magnitude for the current event is summed with the total for the nineteen previous events and the resultant checked to determine whether it exceeds a predetermined minimum. Block 114 represents the production of the fire warning signal if "yes" outputs are produced by both blocks 108 and 112. An alternative method of assessing the magnitude of the radiation is to integrate the digital signal received from the analogue to digital converter over a fixed time period.

The system described above may be used as part of a system for discriminating against interfering sources of radiation. For example, the system shown in Figure 5 could form one channel of a two-channel system. The second channel would be driven by a radiation detector rendered responsive to radiation in a different wavelength band from that of the channel illustrated, such as in another band in which radiation from the flames is expected to lie or another band in which interfering radiation is expected to lie. In the first case, the flame warning signal on line 48 could then be processed in combination with the output of the second channel so as to produce an overall flame warning only when the signal on line 48 is present and when both channels detected flame. In the second case, the signal on line 48 could be produced with the signal from the second channel so that an overall flame warning would only be produced when the signal on line 48 was present and no signal was present from the second channel.

## Claims

1. Apparatus for discriminating between electromagnetic radiation from a fire source and electromagnetic radiation from a non-fire source, comprising a sensor (10;35) responsive to the radiation and producing an electrical signal whose magnitude varies with the magnitude of the radiation, characterised in that said apparatus further comprises detecting means (18,46) operative to detect the turning points of the signal, processing means (18;46) operative to determine the change in magnitude between successive turning points of the signal and including means for producing a set of outputs as points in a two-dimensional matrix or graph, each of said points being dependent on the change in magnitude of the signal between successive turning points such that the relative values of the outputs within the set are dependent on the variations in the signal, and discriminating means (22,24,26;46,70) for comparing the set of outputs of said matrix or graph with reference values to discriminate against such a set of outputs produced when the signal corresponds to substantially regularly varying radiation or substantially step-change radiation from a non-fire source and in favour of such a set of outputs produced when the signal corresponds to substantially randomly and moderately varying radiation from a fire source.

2. Apparatus according to claim 1, characterised in that the processing and discriminating means include a micro-computer (22;46).

3. Apparatus according to claim 1 or 2, characterised in that each of said points is representative of the absolute magnitude of the signal at one turning point compared with the absolute magnitude of the signal at the preceding turning point.

4. Apparatus according to claim 1 or 2, characterised in that each of said points is representative of the change in magnitude between successive turning points of the signal compared with the change in magnitude between the earlier of those turning points and the next preceding turning point.

5. Apparatus according to any one of claims 1 to 3, characterised in that said two-dimensional matrix or graph has axes respectively defining the magnitude of the signal at the two turning points of each pair of successive turning points, and in that the discriminating means (24,26) comprises means for comparing the said matrix or graph with one or more reference matrices representing the said reference values.

6. Apparatus according to any one of claims 1 to 3, characterised in that said two-dimensional matrix or graph has axes respectively defining the amplitude excursion between successive turning points and the elapsed time between successive turning points, and in that the discriminating means (24,26) comprises means for comparing the said matrix or graph with one or more reference matrices representing the said reference values.

7. Apparatus according to claim 1 to 4, characterised in that the said processing means comprises means (46) for measuring the change in signal magnitude between successive said turning points whereby to produce a series of magnitude change signals and further comprises means for producing the set of outputs by simulating the spatial representation of successive points on said matrix or graph, said matrix or graph having two orthogonal axes each of which axes is scaled with values increasing from zero for the said magnitude changes with one of the axes representing each currently considered magnitude change and the other of them representing corresponding immediately preceding magnitude change so that each said point on the graph represents one output in the set and is a plot of a particular one of the magnitude changes as compared with the immediately preceding one thereof, whereby points on said matrix or graph produced when the signal corresponds to the said substantially regularly varying radiation lie within a predetermined region of said matrix or graph extending from the origin and inclined to each said axis, points on said matrix or graph produced when the signal corresponds to the said substantially step-change radiation lie within either of two regions of said matrix or graph extending closely adjacent the respective axes, and points on said matrix or graph produced when the signal corresponds to the said randomly varying radiation tend to lie outside all the said regions, and in that the said discriminating means comprises means (46) responsive to the said reference values to determine the proportion of the said points which lie outside the said regions whereby to produce a warning output indicating that electromagnetic radiation originates from a fire source when the said proportion exceeds a predetermined threshold.

8. Apparatus according to claim 7, characterised by means for blocking the production of the warning output unless, for a predetermined number of the said points, the sum of the corresponding magnitude changes exceed the predetermined value.

9. A method for discriminating between electromagnetic radiation from a fire source and electromagnetic radiation from a non-fire source, comprising the steps of sensing the radiation and producing an electrical signal whose magnitude varies with the magnitude of the radiation, characterised by the steps of detecting the turning points of the signal, determining the change in magnitude between successive turning points of the signal and producing a set of outputs as points in a two-dimensional matrix or graph, each of said points being dependent on the changes in magnitude of the signal between successive turning points such that the relative values of the outputs within the set are dependent on the variations in the signal, and comparing the set of outputs at said matrix or graph with reference values to discriminate against such a set of outputs produced when the signal corresponds to substantially regularly varying radiation or substantially step-change radiation from a non-fire source and in favour of such a set of outputs produced when the signal corresponds to substantially randomly and moderately varying radiation from a fire source.

10. A method according to claim 9, characterised in that each of said points is representative of the absolute magnitude of the signal at one turning point compared with the absolute magnitude of the signal at the preceding turning point.

11. A method according to claim 9, characterised in that each of said points is representative of the change in magnitude between successive turning points of the signal compared with the change in magnitude between the earlier of those turning points and the next preceding turning point.

12. A method according to claim 9 or 10, characterised in that said two-dimensional matrix or graph has axes respectively defining the magnitude of the signal at the two turning points of each pair of successive turning points, and in that the comparing step comprises the step of comparing the said matrix or graph with one or more reference matrices representing the said reference values.

13. A method according to claim 9 or 10, characterised in that the said two-dimensional matrix or graph has axes respectively defining the amplitude excursion between successive turning points and the elapsed time between successive turning points, and in that the comparing step comprises the step of comparing the said matrix or graph with one or more reference matrices representing the said reference values.

14. A method according to claim 9, characterised in that the step of determining the change in signal magnitude between successive said turning points produces a series of magnitude change signals and in that the step of producing the set of outputs produces the set of outputs by simulating the spatial representation of successive points on a graph having two orthogonal axes each of which axes is scaled with values increasing from zero for the said magnitude changes with one of the axes representing each currently considered magnitude change and the other of them representing corresponding immediately preceding magnitude change so that each said point on the graph represents one output in the set and is a plot of a particular one of the magnitude changes as compared with the immediately preceding one thereof, whereby points on the graph produced when the signal corresponds to the said substantially regularly varying radiation lie within a predetermined region of the graph extending from the origin and inclined to each said axis, points on the graph produced when the signal corresponds to the said substantially step-change radiation lie within either of two regions of the graph extending closely adjacent the respective axes, and points on the graph produced when the signal corresponds to the said radiation tend to lie outside all the said regions, and in that the comparing step comprises the step of responding to the said reference values to determine the proportion of the said points which lie outside the said regions whereby to produce a warning output indicating that electromagnetic radiation originates from a fire source when the said proportion exceeds a predetermined threshold.

15. A method according to claim 14, characterised by the step of blocking the production of the warning output unless, for a predetermined number of the said points, the sum of the corresponding magnitude changes exceed the predetermined value.

## Patentansprüche

1. Vorrichtung zum Unterscheiden zwischen elektromagnetischer Strahlung von einer Brandquelle und elektromagnetischer Strahlung von einer nicht mit Brand verbundenen Quelle, mit einem Fühler (10; 35), der auf Strahlung reagiert und ein elektrisches Signal erzeugt, dessen Größe sich mit der Größe der Strahlung ändert, **dadurch gekennzeichnet**, daß die Vorrichtung weiter umfaßt Erfassungsmittel (18, 46), das zum Erfassen der Wendepunkte des Signals wirksam ist, Bearbeitungsmittel (18; 46), das zum Bestimmen der Größenänderung bei aufeinanderfolgenden Wendepunkten des Signals wirksam ist und das Mittel enthält, um eine Reihe von Ausgangssignalen als Punkte in einer zweidimensionalen Matrix oder Graphik zu erzeugen, wobei jeder Punkt von der Größenänderung des Signals bei aufeinanderfolgenden Wendepunkten abhängt, so daß die relativen Werte der Ausgangssignale innerhalb des Satzes von den Signaländerungen abhängig sind, und Unterscheidungsmittel (22, 24, 26; 46, 70) zum Vergleichen des Satzes von Ausgangssignalen der Matrix oder der Graphik mit Referenzwerten, um gegen einen solchen Satz von Ausgangssignalen zu entscheiden, der erzeugt wird, wenn das Signal sich im wesentlichen regelmäßig ändernder Strahlung oder sich im wesentlichen stufenweise ändernder Strahlung von einer nicht mit Brand verbundenen Quelle entspricht, und zugunsten eines Satzes von Ausgangssignalen, der erzeugt wird, wenn das Signal der sich im wesentlichen zufällig und gemäßigt ändernden Strahlung von einer Brandquelle entspricht.

2. Vorrichtung nach Anspruch 1, **dadurch gekennzeichnet**, daß das Bearbeitungs- und Unterscheidungsmittel einen Mikrocomputer (22;46) enthält.

3. Vorrichtung nach Anspruch 1 oder 2, **dadurch gekennzeichnet,** daß jeder Punkt für die absolute Größe des Signals an einem Wendepunkt repräsentativ ist, verglichen mit der absoluten Große des Signals am vorangehenden Wendepunkt.

4. Vorrichtung nach Anspruch 1 oder 2, **dadurch gekennzeichnet**, daß jeder Punkt für die Größenänderungen zwischen aufeinanderfolgenden Wendepunkten des Signals repräsentativ ist, verglichen mit der Größenänderung zwischen dem früheren dieser Wendepunkte und dem nächstvorhergehenden Wendepunkt.

5. Vorrichtung nach einem der Ansprüche 1 bis 3, **dadurch gekennzeichnet**, daß die zweidimensionale Matrix oder Graphik Achsen besitzt, die jeweils die Größe des Signals an den beiden Wendepunkten jedes Paares von aufeinander-folgenden Wendepunkten bestimmen, und daß das Unterscheidungsmittel (24,26) Mittel zum Vergleichen der Matrix oder Graphik mit einer oder mehreren die Referenzwerte repräsentierenden Referenzmatrizen umfaßt.

6. Vorrichtung nach einem der Ansprüche 1 bis 3, **dadurch gekennzeichnet**, daß die zweidimensionale Matrix oder Graphik Achsen besitzt, die jeweils die Amplitudenabweichung zwischen aufeinanderfolgenden Wendepunkten und die zwischen aufeinanderfolgenden Wendepunkten verstrichene Zeit bestimmen, und daß das Unterscheidungsmittel (24,26) Mittel zum Vergleichen der Matrix oder Graphik mit einer oder mehreren die Referenzwerte repräsentierenden Referenzmatrizen umfaßt.

7. Vorrichtung nach Anspruch 1 bis 4, **dadurch gekennzeichnet**, daß das Bearbeitungsmittel Mittel (46) zum Messen der Änderung der Signalgröße an aufeinanderfolgenden Wendepunkten umfaßt, um dadurch eine Reihe von Größenänderungssignalen zu erzeugen, und weiter Mittel zum Erzeugen des Satzes von Ausgangssignalen umfaßt durch Simulieren der räumlichen Verteilung aufeinanderfolgender Punkte an der Matrix oder Graphik, wobei die Matrix oder Graphik zwei orthogonale Achsen besitzt, von denen jede mit Werten skaliert ist, die von Null an ansteigen für die Größenänderungen, wobei eine der Achsen jede gegenwärtig in Betracht gezogene Größenänderung repräsentiert und die andere von ihnen entsprechende unmittelbar vorhergehende Größenänderungen repräsentiert, so daß jeder Punkt auf der Graphik ein Ausgangssignal in dem Satz repräsentiert und eine Aufzeichnung einer bestimmten Größenänderung ist im Vergleich mit der unmittelbar vorhergehenden Größenänderung, wodurch Punkte in der Matrix oder Graphik, die erzeugt werden, wenn das Signal der sich im wesentlichen regelmäßig ändernden Strahlung entspricht, innerhalb eines vorgegebenen Bereichs der Matrix oder Graphik liegt, die sich vom Ursprung aus erstreckt und gegen jede Achse geneigt ist, während Punkte an der Matrix oder Graphik, die erzeugt werden, wenn das Signal der im wesentlichen stufenartigen Änderung entspricht, innerhalb einer der beiden Bereiche der Matrix oder Graphik liegen, die sich eng benachbart den jeweiligen Achsen erstrecken, und Punkte an der Matrix oder der Graphik, die erzeugt werden, wenn das Signal der sich zufällig verändernden Strahlung entspricht, dazu neigen, außerhalb aller dieser Bereiche zu liegen, und daß das Unterscheidungsmittel auf die Referenzwerte ansprechende Mittel (46) umfaßt, um den Anteil der Punkte, die außerhalb der Bereiche liegen, zu bestimmen und dadurch ein Warn-Ausgangssignal zu erzeugen, das anzeigt, daß elektromagnetische Strahlung von einer Brandquelle herrührt, wenn der Anteil eine vorgegebene Schwelle übersteigt.

8. Vorrichtung nach Anspruch 7, **gekennzeichnet durch** Mittel zum Sperren der Erzeugung des Warn-Ausgangssignals, wenn nicht bei einer vorgegebenen Anzahl der Punkte die Summe der entsprechenden Größenänderungen den vorgegebenen Wert übersteigt.

9. Verfahren zum Unterscheiden elektromagnetischer Strahlung von einer Brandquelle von elektromagnetischer Strahlung von einer nicht mit einem Brand verbundenen Quelle, mit den Schritten des Erfassens der Strahlung und Erzeugens eines elektrischen Signals, dessen Größe sich mit der Größe der Strahlung ändert, **gekennzeichnet durch** die Schritte des Erfassens der Wendepunkte des Signals, Bestimmens der Größenänderung bei aufeinanderfolgenden Wendepunkten des Signals und Erzeugens eines Satzes von Ausgangssignalen als Punkten in einer zweidimensionalen Matrix oder Graphik, wobei jeder Punkt von den Größenänderungen des Signals bei aufeinanderfolgenden Wendepunkten so abhängt, daß die relativen Werte der Ausgangssignale innerhalb des Satzes von den Veränderungen des Signals abhängen, und des Vergleichens des Satzes von Ausgangssignalen mit einem solchen Satz von Ausgangssignalen, die erzeugt werden, wenn das Signal sich im wesentlichen regelmäßig ändernder Strahlung oder im wesentlichen stufenweiser Strahlung von einer nicht mit Brand verbundenen Quelle entspricht und zu Gunsten eines solchen Satzes von Ausgangssignalen, der erzeugt wird, wenn das Signal der sich im wesentlichen zufällig und gemäßigt ändernden Strahlung von einer Brandquelle entspricht.

10. Verfahren nach Anspruch 9, **dadurch gekennzeichnet,** daß jeder Punkt für die absolute Größe des Signals an einem Wendepunkt, verglichen mit der absoluten Größe des Signals an dem vorhergehenden Wendepunkt, repräsentativ ist.

11. Verfahren nach Anspruch 9, **dadurch gekennzeichnet,** daß jeder Punkt für die Größenänderung aufeinanderfolgender Wendepunkte des Signals repräsentativ ist, verglichen mit der Größenänderung zwischen dem früheren dieser Wendepunkte und dem nächstvorangehenden Wendepunkt.

12. Verfahren nach Anspruch 9 oder 10, **dadurch gekennzeichnet,** daß die zweidimensionale Matrix oder Graphik Achsen besitzt, die jeweils die Größe des Signals an den beiden Wendepunkten jedes Paares aufeinanderfolgender Wendepunkte definieren und daß der Schritt des Vergleichens den Schritt des Vergleichens der Matrix oder Graphik mit einer oder mehreren die Referenzwerte repräsentierenden Referenzmatrizen umfaßt.

13. Verfahren nach Anspruch 9 oder 10, **dadurch gekennzeichnet,** daß die zweidimensionale Matrix oder Graphik Achsen besitzt, die jeweils die Amplitudenabweichung bei aufeinanderfolgenden Wendepunkten und die zwischen den aufeinanderfolgenden Wendepunkten verstrichene Zeit definieren, und daß der Schritt des Vergleichens den Schritt des Vergleichens der Matrix oder Graphik mit einer oder mehreren die Referenzwerte repräsentierenden Referenzmatrizen umfaßt.

14. Verfahren nach Anspruch 9, **dadurch gekennzeichnet**, daß der Schritt des Bestimmens der Änderung der Signalgröße von aufeinanderfolgenden Wendepunkten eine Reihe von Größenänderungssignalen erzeugt und daß der Schritt des Erzeugens des Satzes von Ausgangssignalen den Satz von Ausgangssignalen erzeugt durch Simulieren der räumlichen Darstellung aufeinanderfolgender Punkte an einer Graphik mit zwei orthogonalen Achsen, von denen jede Achse mit von Null an ansteigenden Werten für die Größenänderungen skaliert ist, wobei eine Achsen jede gegenwärtig in Betracht gezogene Größenänderung und die andere entsprechende unmittelbar vorhergehende Größenänderung repräsentiert, so daß jeder Punkt an der Graphik ein Ausgangssignal in dem Satz repräsentiert und eine Auftragung einer gegebenen Größenänderung ist, verglichen mit der unmittelbar vorhergehenden Größenänderung, wodurch Punkte an der Graphik, die erzeugt werden, wenn das Signal der sich im wesentlichen regelmäßig ändernden Strahlung entsprechen, innerhalb eines vorgegebenen Bereiches der Graphik liegen, die sich von dem Ursprung weg erstreckt und zu jeder Achse geneigt ist, Punkte an der Graphik, die erzeugt werden, wenn das Signal der im wesentlichen sich stufenartig ändernden Strahlung entsprechen, innerhalb eines der beiden Bereiche der Graphik liegen, die sich eng benachbart den jeweiligen Achsen erstrecken, und Punkte an der Graphik, die erzeugt werden, wenn das Signal der genannten Strahlung entspricht, dazu neigen, außerhalb aller genannter Bereiche zu liegen, und daß der Schritt des Vergleichens den Schritt des Reagierens auf die Referenzwerte umfaßt, um den Anteil der Punkte zu bestimmen, die außerhalb der genannten Bereiche liegen, um dadurch ein Warn-Ausgangssignal zu erzeugen, das anzeigt, daß elektromagnetische Strahlung von einer Brandquelle herrührt, wenn der Anteil einen vorgegebenen Schwellwert übersteigt.

15. Verfahren nach Anspruch 14, **gekennzeichnet durch** den Schritt des Sperrens der Erzeugung des Warn-Ausgangssignals, wenn nicht bei einer vorgegebenen Anzahl der Punkte die Summe der entsprechenden Größenänderungen den vorgegebenen Wert übersteigt.

## Revendications

1. Dispositif pour faire la distinction entre un rayonnement électromagnétique provenant d'une source de feu et un rayonnement électromagnétique provenant d'une source autre que du feu, comprenant un capteur (10 ; 35) sensible au rayonnement et produisant un signal électrique dont l'amplitude varie avec l'amplitude du rayonnement, caractérisé en ce que ledit dispositif comprend en outre : un moyen de détection (18, 46) servant à détecter les points d'inflexion du signal ; un moyen de traitement (18 ; 46) servant à déterminer la variation d'amplitude entre des points d'inflexion successifs du signal et comprenant un moyen pour produire un ensemble de sorties, comme des points dans une matrice, ou un graphique, bidimensionnel, chacun desdits points étant fonction de la variation d'amplitude du signal entre les points d'inflexion successifs, de telle façon que les valeurs relatives des sorties de l'ensemble sont fonctions des variations du signal ; et un moyen de discrimination (22, 24, 26 ; 46, 70) pour comparer l'ensemble des sorties de ladite matrice, ou graphique, à des valeurs de référence pour faire la distinction contre un tel ensemble de sorties produit lorsque le signal correspond à un rayonnement variant de façon sensiblement régulière ou un rayonnement variant de façon sensiblement par pas provenant d'une source autre que du feu, et en faveur d'un tel ensemble de sorties produit lorsque le signal correspond à un rayonnement variant sensiblement de façon aléatoire et modérée provenant d'une source de feu.

2. Dispositif selon la revendication 1, caractérisé en ce que le traitement et le moyen de discrimination comprennent un microcalculateur (22 ; 46).

3. Dispositif selon la revendication 1 ou 2, caractérisé en ce que chacun desdits points est représentatif de l'amplitude absolue du signal au droit d'un point d'inflexion comparée à l'amplitude absolue du signal au point d'inflexion précédent.

4. Dispositif selon la revendication 1 ou 2, caractérisé en ce que chacun desdits points est représentatif de la variation d'amplitude entre des points d'inflexion successifs du signal comparée à la variation d'amplitude entre le plus tôt de ces points d'inflexion et le point d'inflexion précédant immédiatement.

5. Dispositif selon l'une quelconque des revendications 1 à 3, caractérisé en ce que ladite matrice, ou ledit graphique, bidimensionnel a des axes définissant respectivement l'amplitude du signal au droit de deux points d'inflexion de chaque paire de points d'inflexion successifs, et en ce que le moyen de discrimination (24, 26) comprend un moyen pour comparer ladite matrice, ou ledit graphique, avec une ou plusieurs matrices de référence représentant lesdites valeurs de référence.

6. Dispositif selon l'une quelconque des revendications 1 à 3, caractérisé en ce que ladite matrice, ou ledit graphique, bidimensionnel a des axes définissant respectivement l'amplitude d'excursion entre des points d'inflexion successifs et le temps écoulé entre les points d'inflexion successifs. et en ce que le moyen de discrimination (24, 26) comprend un moyen pour comparer ladite matrice, ou ledit graphique, avec une ou plusieurs matrices de référence représentant lesdites valeurs de référence.

7. Dispositif selon la revendication 1 à 4, caractérisé en ce que ledit moyen de traitement comprend : un moyen (46) pour mesurer la variation d'amplitude de signal entre lesdits points d'inflexion successifs pour produire ainsi une série de signaux de variation d'amplitude ; et en ce qu'il comprend en outre un moyen pour produire un ensemble de sorties en simulant la représentation spatiale de points successifs sur ladite matrice, ou ledit graphique, ladite matrice, ou ledit graphique, comportant deux axes orthogonaux dont chaque axe est gradué avec des valeurs croissant à partir de zéro pour lesdites variations d'amplitude, l'un des axes représentant chaque variation d'amplitude considérée de manière courante et l'autre représentant la variation d'amplitude immédiatement précédente correspondante, de sorte que chaque desdits points sur le graphique représente une sortie de l'ensemble et est un relevé de l'une particulière des variations d'amplitude par comparaison avec celle qui la précède immédiatement, ce par quoi les points sur ladite matrice, ou ledit graphique, produits lorsque le signal correspond audit rayonnement variant de façon sensiblement régulière, se trouvent à l'intérieur d'une région prédéterminée de ladite matrice, ou dudit graphique, s'étendant depuis l'origine et inclinée par rapport à chacun desdits axes, les points sur ladite matrice, ou ledit graphique, produits lorsque le signal correspond audit rayonnement variant sensiblement par pas, se trouvent à l'intérieur de l'une ou l'autre de deux régions de ladite matrice, ou dudit graphique, s'étendant à proximité rapprochée des axes respectifs, et les points sur ladite matrice, ou ledit graphique, produits lorsque le signal correspond audit rayonnement variant de façon aléatoire, ont tendance à se trouver à l'extérieur de toutes lesdites régions ; et en ce que ledit moyen de discrimination comprend un moyen (46) sensible auxdites valeurs de référence pour déterminer la proportion desdits points qui se trouvent à l'extérieur desdites régions pour produire ainsi, lorsque ladite proportion dépasse un seul prédéterminé, une sortie d'avertissement indiquant que le rayonnement électromagnétique a pour origine une source de feu.

8. Dispositif selon la revendication 7, caractérisé par un moyen pour interdire la production de ladite sortie d'avertissement à moins que, pour un nombre prédéterminé desdits points, la somme des variations d'amplitude correspondantes dépasse la valeur prédéterminée.

9. Procédé pour faire la distinction entre un rayonnement électromagnétique provenant d'une source de feu et un rayonnement électromagnétique provenant d'une source autre que du feu, comprenant les étapes : de détection du rayonnement et de production d'un signal électrique dont l'amplitude varie avec l'amplitude du rayonnement, caractérisé par les étapes de détection des points d'inflexion du signal ; de détermination de la variation d'amplitude entre des points d'inflexion successifs du signal et de production d'un ensemble de sorties, comme des points dans une matrice, ou un graphique, bidimensionnel, chacun desdits points étant fonction de la variation d'amplitude du signal entre les points d'inflexion successifs, de telle façon que les valeurs relatives des sorties de l'ensemble sont fonctions des variations du signal ; et de comparaison de l'ensemble des sorties de ladite matrice, ou graphique, à des valeurs de référence pour faire la distinction contre un tel ensemble de sorties produit lorsque le signal correspond à un rayonnement variant de façon sensiblement régulière ou un rayonnement variant de façon sensiblement par pas provenant d'une source autre que du feu, et en faveur d'un tel ensemble de sorties produit lorsque le signal correspond à un rayonnement variant sensiblement de façon aléatoire et modérée provenant d'une source de feu.

10. Procédé selon la revendication 9, caractérisé en ce que chacun desdits points est représentatif de l'amplitude absolue du signal au droit d'un point d'inflexion comparée à l'amplitude absolue du signal au point d'inflexion précédent.

11. Procédé selon la revendication 9, caractérisé en ce que chacun desdits points est représentatif de la variation d'amplitude entre des points d'inflexion successifs du signal comparée à la variation d'amplitude entre le plus tôt de ces points d'inflexion et le point d'inflexion précédant immédiatement.

12. Procédé selon la revendication 9 ou 10, caractérisé en ce que ladite matrice, ou ledit graphique, bidimensionnel a des axes définissant respectivement l'amplitude du signal au droit de deux points d'inflexion de chaque paire de points d'inflexion successifs, et en ce que l'étape de comparaison comprend une étape de comparaison de ladite matrice, ou dudit graphique, avec une ou plusieurs matrices de référence représentant lesdites valeurs de référence.

13. Procédé selon la revendication 9 ou 10, caractérisé en ce que ladite matrice, ou ledit graphique, bidimensionnel a des axes définissant respectivement l'amplitude d'excursion entre des points d'inflexion successifs et le temps écoulé entre les points d'inflexion successifs. et en ce que ladite étape de comparaison comprend une étape de comparaison de ladite matrice, ou dudit graphique, avec une ou plusieurs matrices de référence représentant lesdites valeurs de référence.

14. Procédé selon la revendication 9, caractérisé en ce que l'étape de détermination de la variation d'amplitude de signal entre lesdits points d'inflexion successifs produit une série de signaux de variation d'amplitude ; et en ce que l'étape de l'ensemble de sorties produit l'ensemble de sorties en simulant la représentation spatiale de points successifs sur un graphique comportant deux axes orthogonaux dont chaque axe est gradué avec des valeurs croissant à partir de zéro pour lesdites variations d'amplitude, l'un des axes représentant chaque variation d'amplitude considérée de manière courante et l'autre représentant la variation d'amplitude immédiatement précédente correspondante, de sorte que chaque desdits points sur le graphique représente une sortie de l'ensemble et est un relevé de l'une particulière des variations d'amplitude par comparaison avec celle qui la précède immédiatement, ce par quoi les points sur le graphique, produits lorsque le signal correspond audit rayonnement variant de façon sensiblement régulière, se trouvent à l'intérieur d'une région prédéterminée du graphique s'étendant depuis l'origine et inclinée par rapport à chacun desdits axes, les points sur le graphique, produits lorsque le signal correspond audit rayonnement variant sensiblement par pas, se trouvent à l'intérieur de l'une ou l'autre de deux régions du graphique, s'étendant à proximité rapprochée des axes respectifs, et les points sur le graphique, produits lorsque le signal correspond audit rayonnement, ont tendance à se trouver à l'extérieur de toutes lesdites régions ; et en ce que l'étape de comparaison comprend l'étape de réaction auxdites valeurs de référence pour déterminer la proportion desdits points qui se trouvent à l'extérieur desdites régions pour produire ainsi, lorsque ladite proportion dépasse un seul prédéterminé, une sortie d'avertissement indiquant que le rayonnement électromagnétique a pour origine une source de feu.

15. Procédé selon la revendication 14, caractérisé par une étape pour interdire la production de ladite sortie d'avertissement à moins que, pour un nombre prédéterminé desdits points, la somme des variations d'amplitude correspondantes dépasse la valeur prédéterminée.
